# EUROPEAN PATENT SPECIFICATION

(11) **EP 1 724 996 B1**
(45) Date of publication and mention of the grant of the patent: **08.06.2011**
(21) Application number: 06008783.0
(22) Date of filing: 27.04.2006
(51) Int. Cl.: H04M 1/247, G06F 3/033

(54) **Mobile terminal having scrolling device and method implementing functions using the same**
Mobiles Endgerät mit einer Scroll-Einrichtung und einer Methode Funktionen implimentierend, welche dieselbe benutzen
Terminal mobile avec un dispositif de défilement et un procédé l'utilisant

(30) Priority: 16.05.2005 KR 20050040736
(43) Date of publication of application: 22.11.2006
(73) Proprietor: LG Electronics Inc., Seoul 150-721 (KR)
(72) Inventor: Hur, Yong Suk, Seoul (KR); Lim, Min Taik, Seoul (KR)
(74) Representative: Beyer, Andreas

(56) References cited:
- EP-A- 0 961 461
- EP-A- 1 028 570
- DE-A1- 10 128 192
- US-A1- 2002 196 238
- US-A1- 2003 076 306
- US-B1- 6 262 717

## Description

### BACKGROUND

### Field of the Disclosure

The present disclosure relates to a mobile terminal, and more particularly, to a mobile terminal having a scrolling device and a method for implementing functions using the same, in which the scrolling device may be used to quickly and conveniently search menus or implement specific functions.

The general trend is that mobile terminals having one or more functions, such as mobile telecommunication, game, MP3, digital camera, and digital broadcasting reception, are provided with a control device. Particularly, with the advancement of wireless telecommunication technology, a mobile communication terminal is now equipped with numerous functions. For instance, a typical mobile communication terminal on the market will provide various functions for multimedia files, such as functions for transmission and reception of multimedia messaging system (MMS) data, digital camera, MP3 player, TV reception, and video clip reproduction, in addition to data communication functions such as voice communication. With the extension of functions, the mobile communication terminal may have a large internal memory and may also be equipped to receive an outer memory card such as a memory stick duo®. This increases the number of files to be managed in the mobile communication terminal. Therefore, the mobile communication terminal may require an improved control device that can search the files. The mobile communication terminal may also require a file search function that can be implemented even when MP3 or video clip is being played.

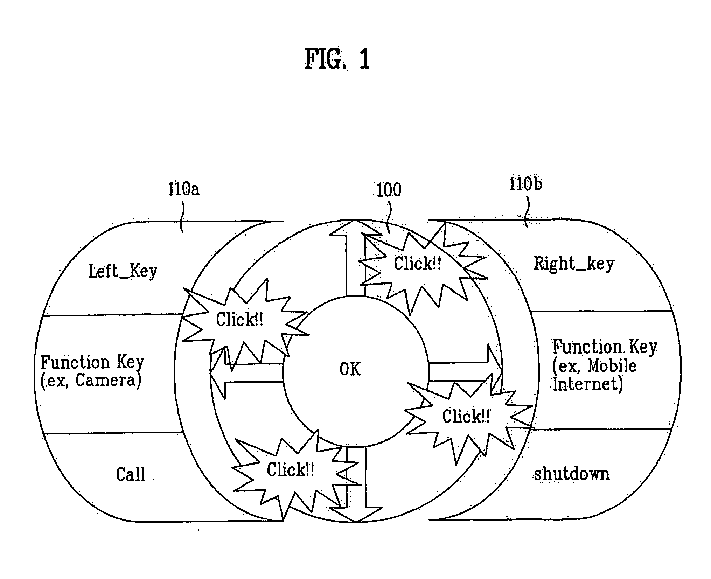

FIG. 1 illustrates a configuration of a navigation key 100 and function keys 110a and 110b of a related art mobile communication terminal. A method for implementing functions in the related art mobile communication terminal will be described with reference to FIG. 1.

In the related art mobile communication terminal, the user has to repeatedly click the navigation key 100 in order to move through a menu or menus, search an address list, or search a multimedia file such as MP3 or video clip. After the user has found the desired menu portion or item using the navigation key 100, the user clicks a function key 110a or 110b to implement a specific function.

However, the aforementioned related art mobile communication terminal has several problems.

First, time is wasted because the user has to repeatedly click the navigation key 100 in order to move through the menu or menus, or to search for the desired item.

Second, repetitiously clicking the navigation key 100 is monotonous.

Third, the user has to repeatedly press the navigation key 100 in order to navigate to the location of the multimedia file to be retrieved. This causes the user inconvenience.

Finally, the user has to click a separate function key 110a or 110b to implement the specific function. This also causes the user inconvenience.

US 2003/0076306 A1 discloses a handheld device, in particular a media player, with a touch pad. The touch pad can sense and resolve angular and/or radial positions of a moving object, for example a finger, which is moved in a rotating and/or radial manner across the touch pad. The sensing of said positions is based on polar coordinates. It is therefore possible to transform the angular or radial movements of the object into linear movements on the display for scrolling, e.g. through a media list. Due to the sensed positions corresponding to the angular motions of the object, a processor is able to determine the next items of the media list, which are to be presented on the display.

DE 101 28 192 A1 describes a touch pad for a laptop computer, wherein the touch pad is able to sense, for example by means of a temperature sensor, whether a human being touches the surface of the touch pad.

EP 1 028 571 A1 discloses a terminal for wireless telecommunication. The terminal comprises a display and a scroll means for scrolling through icons. The scroll means is a jog dial, which can be turned clockwise or counterclockwise to scroll through the display icons and to select one of them.

EP 0 961 461 A1 discloses a portable telephone device and a rotary operation key in the form of a jog dial. The device further comprises an operation detecting means, storing means and display means for displaying a plurality of items. According to the movement of the jog dial, certain items can be selected and displayed.

US 6,262,717 B1 discloses a touch pad for use in a kiosk in addition to a touch screen.

### SUMMARY

Accordingly, the present disclosure is directed to a mobile terminal having a scrolling device and a method for implementing functions using the same, which substantially obviate one or more problems due to limitations and disadvantages of the related art.

The present disclosure may disclose a mobile terminal having a scroll wheel device and a method for implementing functions using the same, in which the scroll wheel device enables the user's search to be quicker.

The present disclosure may disclose a mobile terminal having a scroll wheel device and a method for implementing functions using the same, in which the scroll wheel device and a user interface linked to a user's operation are provided to give the user convenience.

The present disclosure may disclose a mobile terminal having a scroll wheel device and a method for implementing functions using the same, in which the scroll wheel device is provided to give the user convenience if various applications require scrolling.

Further, the present disclosure may disclose a mobile terminal having a scroll wheel device and a method for implementing functions using the same, in which a specific function is implemented without clicking a function key.

Advantages, objects, and features of the disclosure will be set forth in part in the description which follows and in part will become apparent to those having ordinary skill in the art upon examination of the following or may be learned from practice of the invention. The objectives and other advantages of the invention may be realized and/or may be attained by the structure and/or method pointed out in the written description and claims hereof as well as the appended drawings.

To achieve the objects and other advantages and in accordance with the purpose of the invention, whose embodiments are described herein, a mobile terminal having a scroll wheel device according to an embodiment of the present invention includes a display, the scroll wheel device that senses a user's wheeling operation, a memory that stores data having different menus and associated user interface screens, and a controller that calculates a wheeling distance corresponding to the wheeling operation sensed by the scroll wheel device, searches the data from the memory that corresponds to a menu associated with a the wheeling distance range of the calculated wheeling distance, searches the data from memory that corresponds to a user interface screen associated with the menu, and outputs a first control signal to the display to display the user interface screen.

Preferably, the controller calculates the wheeling distance based on a first contact point, a final contact point, and a direction of the wheeling operation sensed by the scroll wheel device.

Preferably, the controller outputs the first control signal if the controller determines that the calculated wheeling distance range is greater than a triggering wheeling distance.

Preferably, the scroll wheel device is either a touch wheel device that senses the user's contact operation using a heat sensor or a jog dial device having a dial that is operable by the user.

Further, supposing the scroll wheel device is the touch wheel device, the controller further outputs a second control signal to implement a specific function corresponding to the searched menu if the user breaks contact from the touch wheel device.

In another embodiment of the present invention, a mobile terminal having a touch wheel device includes a display, the touch wheel device having a heat sensor that senses a user's contact and wheeling operation, a memory storing data corresponding to different menus, and a controller that outputs a first control signal based on calculating a wheeling distance that corresponds to the wheeling operation sensed by the touch wheel device, searching data from the memory that corresponds to a menu associated with a wheeling distance range of the calculated wheeling distance, searching data from the memory that corresponds to a user interface screen associated with the menu, and wherein the first control signal causes the display to display the user interface screen, and the controller further outputs a second control signal that implements a specific function corresponding to the searched menu if the user breaks contact from the touch wheel device.

In another embodiment of the present invention, a method for implementing functions using a mobile terminal having a scroll wheel device includes the steps of a) calculating a wheeling distance corresponding to a sensed wheeling operation, b) searching for data that corresponds to a menu associated with a wheeling distance range of the calculated wheeling distance, and c) displaying a user interface screen corresponding to the searched menu.

Supposing the scroll wheel device is a touch wheel device, the method further includes the step of implementing a specific function corresponding to the searched menu if the user breaks contact from the touch wheel device.

In still another embodiment of the present invention, a method for implementing functions using a mobile terminal having a touch wheel device includes the steps of a) calculating a wheeling distance corresponding to a sensed wheeling operation, b) searching for data that corresponds to a menu associated with a wheeling distance range of the calculated wheeling distance, c) displaying a user interface screen corresponding to the searched menu, and d) implementing a specific function corresponding to the searched menu if the user's contact is no longer sensed.

It is to be understood that both the foregoing general description and the following detailed description are exemplary and explanatory and should not be construed as limiting the scope of the claims.

### BRIEF DESCRIPTION OF THE DRAWINGS

The accompanying drawings, which are included to provide a further understanding of the invention and are incorporated in and constitute a part of this application, illustrate embodiment(s) of the invention and together with the description may serve to explain the principles of the invention. In the drawings:
- FIG. 1: illustrates a configuration of a navigation key and a function keys of a related art mobile communication terminal;
- FIG. 2: is a block diagram illustrating a mobile terminal having a scroll wheel device according to an embodiment of the present invention;
- FIG. 3A to FIG. 3F: are exemplary views illustrating user interface screens according to an embodiment of the present invention;
- FIG. 4A and FIG. 4B: are exemplary views illustrating function keys separately provided outside a scroll wheel device in accordance with an embodiment of the present invention;
- FIG. 5: is an exemplary view illustrating function keys separately provided inside a scroll wheel device in accordance with an embodiment of the present invention;
- FIG. 6: is an exemplary view illustrating function keys overlapped with a scroll wheel device in accordance with an embodiment of the present invention;
- FIG. 7: is a flow chart illustrating an exemplary method for implementing functions using a mobile terminal having a scroll wheel device according to an embodiment of the present invention;
- FIG. 8: is a flow chart illustrating an exemplary method for implementing functions using function keys in accordance with an embodiment of the present invention; and
- FIG. 9: is a flow chart illustrating an exemplary method for implementing functions using a touch wheel device in accordance with an embodiment of the present invention.

### DETAILED DESCRIPTION

Reference will now be made to embodiments of the invention, examples of which are illustrated in the accompanying drawings. Wherever possible, the same reference numbers will be used throughout the drawings to refer to the same or like parts.

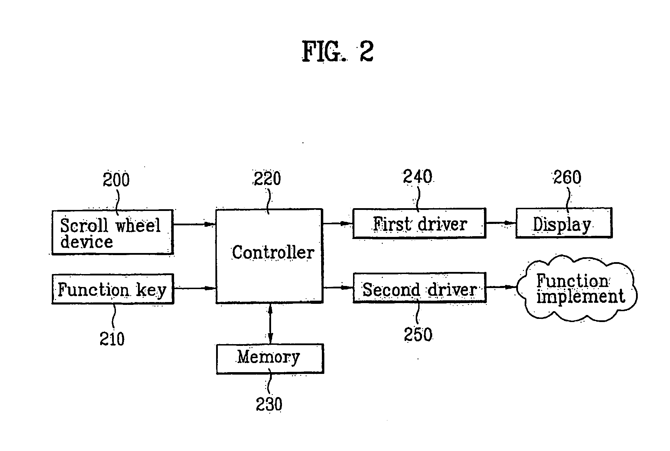

The mobile terminal having a scroll wheel device according to an embodiment of the present invention will be described in detail with reference to FIG. 2 to FIG. 6.

As shown in FIG. 2, the mobile terminal according to one embodiment of the present invention may include a scroll wheel device 200, at least one function key 210, a controller 220, a memory 230, a first driver 240, a second driver 250, and a display 260.

The scroll wheel device 200 comprehensively includes a touch wheel device or a jog dial device. The scroll wheel device 200 may be used by a user to search a menu or a list, or implement a specific function.

The scroll wheel device 200 may be a touch wheel device that may sense the user's finger motion using a heat sensor. Various menus and lists may be scrolled on a display screen of the mobile terminal as the user moves his or her finger along a surface of the touch wheel device.

The scroll wheel device 200 may be a jog dial device having a freely rotatable dial. Various menus and lists can be searched quickly and conveniently as the dial is wheeled.

The function key 210 may be a key assigned with a specific function, which may allow the user to implement a function when the key is used. The mobile terminal may be provided with at least one or more function keys.

The controller 220 may control the whole operation of the mobile terminal.
Examples of operations of the controller 220 will be described further below.

The memory 230 may store data corresponding to different menus, each menu capable of being retrieved by the controller 220, for example, based on a distance a user's finger travels on a scroll wheel of the scroll wheel device 200. The memory 230 may also store data corresponding to different menus where each menu is associated with a user interface screen. The user interface screen may include information that corresponds with items on the menu.

The display 260 may display status of the mobile terminal or various kinds of information.

The mobile terminal according to one embodiment of the invention may include a modem for mobile communication to implement data transmission and reception through a mobile communication network. Alternatively, the mobile terminal may include a modem for implementing specific functions.

Before the mobile terminal having a scroll wheel device according to an embodiment of the present invention is further described, certain terms used in the disclosure will be discussed in order to aid in the understanding of the terms.

A wheeling distance may mean a distance between a first contact point of a user's finger to a final contact point sensed by the scroll wheel device 200. The wheeling distance may be calculated taking into consideration a direction of the wheeling operation. In other words, the scroll wheel device 200 may sense whether the user moved his or her finger in a clockwise direction and/or a counter clockwise direction while in contact with the scroll wheel device 200. For example, assuming that the scroll wheel device 200 is circular, if the user moves his or her finger counterclockwise a distance of a 1/4 circumference of the scroll wheel device 200, the scroll wheel device 200 may register the user's finger motion as a wheeling distance of a 1/4 in the counterclockwise direction. If the user moves his or her finger clockwise a distance of a 1/4 circumference of the scroll wheel device 200, the scroll wheel device 200 may register the user's finger motion as a wheeling distance of a 1/4 in the clockwise direction. If the user moves his or her finger counterclockwise by a wheeling distance of a 1/4 after moving clockwise by a wheeling distance of a 1/2, the scroll wheel device 200 may register the wheeling distance as the combination of the two, which is a wheeling distance of a 1/4 clockwise.

A wheeling distance range may mean a range that is associated with certain values of wheeling distances. For example, a wheeling distance of 0~1/8 may be set as a first wheeling distance range while a wheeling distance of 1/8~1/4 may be set as a second wheeling distance range.

The wheeling distance and the wheeling distance range may be predefined on the scroll wheel device 200. For example, supposing that the scroll wheel device 200 is substantially round, the scroll wheel device 200 may be divided into sections and the wheeling distance and the wheeling distance range may be predefined according to the number of the sections the user's finger traveled.

A wheeling operation may mean the user's input on the scroll wheel device 200.

For example, if the scroll wheel device 200 is a touch wheel device, the user may move his or her finger on the surface of the touch wheel device. In this case, the user's finger motion on the touch wheel device may be the user's input.

If the scroll wheel device 200 is the jog dial device, the user may wheel the dial of the jog dial device using his or her finger. In this case, the user's finger motion on the dial may be the user's input.

Further, a triggering wheeling distance may mean a minimum wheeling distance that needs to be traveled before the scroll wheel device senses the wheeling distance as an input that is associated with a specific wheeling distance range.

Referring now to FIG. 2, the controller 220 may receive and calculate a wheeling distance corresponding to the user's wheeling operation. Once the wheeling distance corresponding to the wheeling operation is calculated, the controller 220 may determine a wheeling distance range associated with the calculated wheeling distance. Then, the controller 220 may search data stored in the memory 230 for a menu corresponding to the wheeling distance range.

For example, supposing that there are menus such as "MP3," "TV," and "CAMERA" that are on same peer level, the wheeling distance of 1/4~1/2 may correspond to the first wheeling distance range, which may correspond to the "MP3" menu, the wheeling distance of 1/2~3/4 may correspond to the second wheeling distance range, which may correspond to the "TV" menu, and the wheeling distance of 3/4~1 may correspond to the third wheeling distance range, which may correspond to the "CAMERA" menu.

Also, the controller 220 may search the data in the memory 230 for a user interface screen corresponding to the selected menu. The controller 220 then may generate a first control signal that causes the display 260 to display the user interface screen corresponding to the selected menu. Of course, the controller 220 generates the first control signal to cause the display 260 to display an initial user interface screen if the wheeling distance corresponds to the initial wheeling distance range, which is greater than the triggering wheeling distance.

If the wheeling distance corresponds to an arbitrary wheeling distance range and not the initial wheeling distance range, the first control signal causes the display 260 to display a user interface screen corresponding to a menu that corresponds with the arbitrary wheeling distance range.

The first driver 240 drives the display 260 depending on the first control signal.

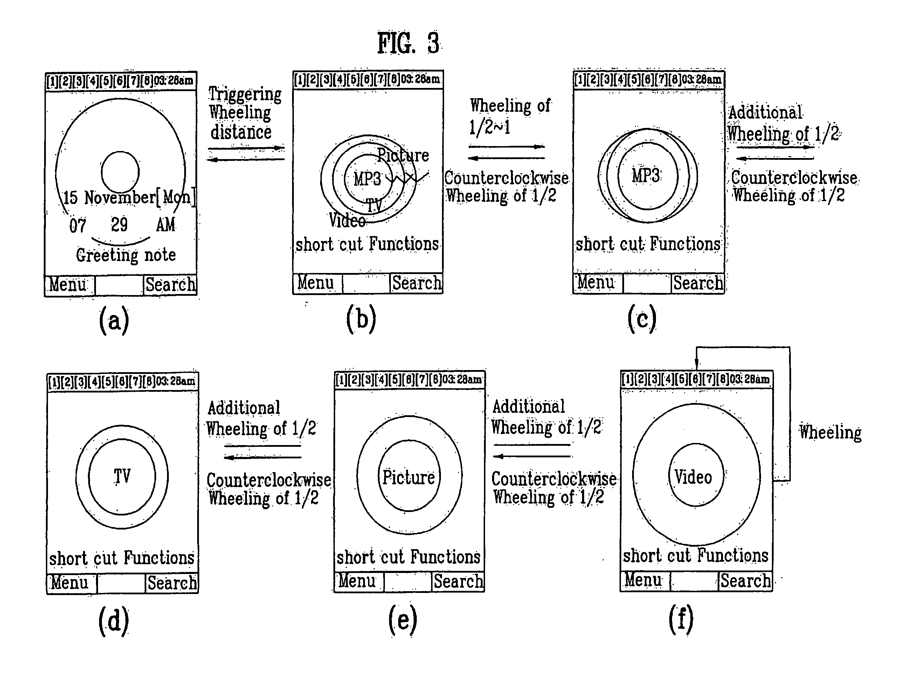

Examples of the displayed user interface screen according to an operation of the controller 220 will be described with reference to FIGS. 3A-3F.

When the user inputs a certain wheeling distance (for example, triggering wheeling distance) to the scroll wheel device 200 while the display 260 displays a standby screen shown in FIG. 3A, the controller 220 causes the display 260 to display a screen shown in FIG. 3B. Specifically, FIG. 3B illustrates an initial user interface screen that displays various function items. Specifically, FIG. 3B illustrates user interface screens such as "MP3," "TV," "Picture," and "Video" that are superimposed on each other. If the user continues the wheeling operation, the controller 220 may cause the display 260 to display a screen shown in FIG. 3C. FIG. 3C illustrates a user interface screen that displays a specific menu such as "MP3". If the user further continues the wheeling operation, the screen displays other user interface screens based on the wheel distance range determined by the controller 220. For instance, FIG. 3D illustrates a user interface screen that displays the "TV" menu, FIG. 3E illustrates a user interface screen that displays the "Picture" menu, and FIG. 3F illustrates a user interface screen that displays the "Video" menu. In other words, the displayed user interface screen indicates a menu selected by the controller 220 in response to the wheeling distance range resulting from the user's wheeling operation.

As further shown in FIGS. 3A-3F, the wheeling distance is calculated depending on the clockwise or counterclockwise wheeling operation of the user. The user interface screen indicating a menu that matches each wheeling distance is displayed. For example, once the wheeling distance of 1/2 is clockwise added to the screen shown in FIG. 3E, the screen shown in FIG. 3F is displayed. Once the wheeling distance of 1/2 is counterclockwise added to the screen shown in FIG. 3E, the screen shown in FIG. 3D is displayed.

According to one embodiment of the present invention, the user interface screens may provide a "hierarchical feedback" as they change from one user interface screen to another. For instance, a specific user interface screen is gradually changed. For example, the user interface screen's (1) brightness or chroma of one color may gradually become brighter or fainter, (2) a size of a circle may gradually become larger or smaller, and (3) a figure such as a spiral shape may gradually become colored with a specific color along its line. Usually, a hierarchical feedback is applied to the menus having the same peer level.

Referring now to FIG. 2, an operation of the controller 220 for implementing a specific function will now be described below.

First, the case where the scroll wheel device 200 is the touch wheel device will be described.

Once the user has finished his or her wheeling operation and does not make contact with the touch wheel device, the controller 220 may determine that the wheeling operation has ended and may calculate a wheel distance range based on the wheeling operation. The controller 220 may then output a second control signal that may implement a specific function corresponding to the searched menu.

The second driver 250 may receive and may implement the specific function in accordance with the second control signal output from the controller 220.

For instance, as the user performs a wheeling operation to the touch wheel device, a sequence of user interface screens may be displayed depending on which menu corresponds to a particular wheeling distance during the wheeling operation. In this state, if the user does not make contact with the touch wheel device anymore, a specific menu or function is displayed that corresponds to the wheel distance range at the time the user broke contact with the touch wheel device. For example, once the user breaks contact with the touch wheel device and the wheel distance range corresponds to the menu "MP3", then the user interface screen corresponding to the menu "MP3" is displayed on the display 260.

The specific function corresponding to the searched menu may be various types. A menu may be various applications, folders, file lists, and other functions, which are provided by the mobile terminal. For example, if the searched menu has lower level menus, the lower level menus are displayed. If the searched menu is a specific application, the application is implemented. In addition, a specific file may be activated depending on the second control signal while the user searches a list of files. In the case of an image file, the image may be displayed. In case of an MP3 file, the MP3 file may be implemented via a speaker to output sound.

The description above with respect to a touch wheel device may be equally applicable in the case where the scroll wheel device 200 is the jog dial device, except that the user performs a wheeling operation by "jogging" a dial of the jog dial device.

The controller 220 may generate a third control signal for implementing a specific function corresponding to an input from the function key 210, which is performed when the user clicks the function key 210.

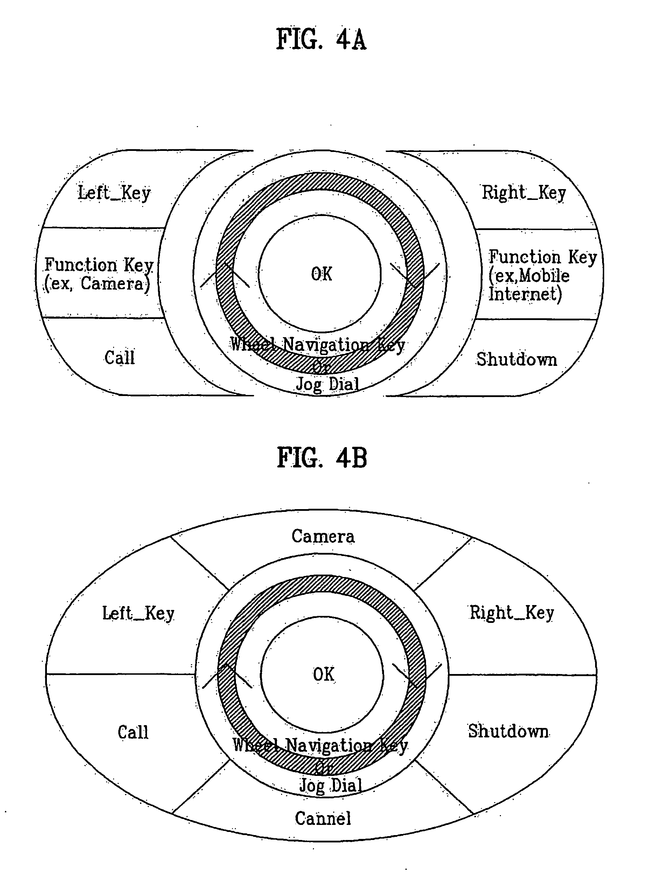

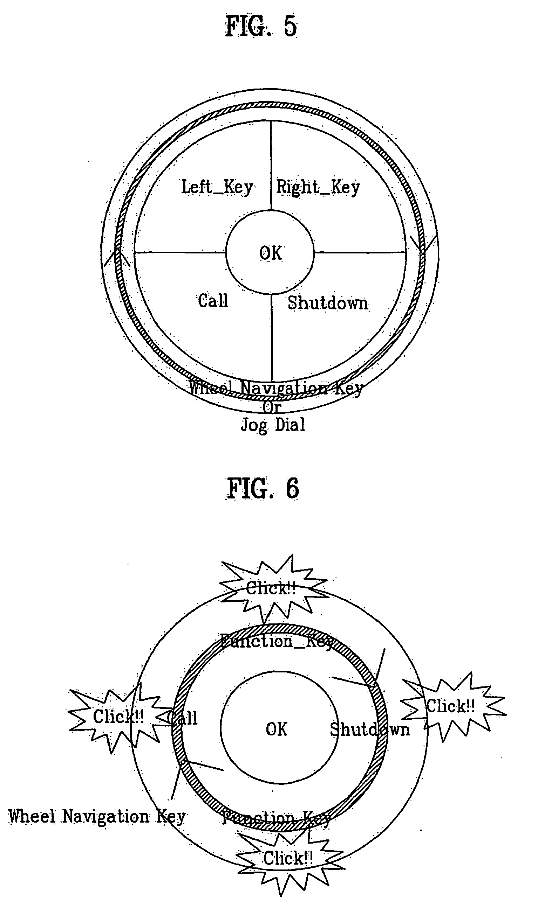

FIG. 4A and FIG. 4B illustrate various function keys separately provided and outside the scroll wheel of the scroll wheel device 200 in accordance with an embodiment of the present invention. FIG. 5 is an exemplary view illustrating various function keys provided inside the scroll wheel of the scroll wheel device 200 in accordance with an embodiment of the present invention. FIG. 6 is an exemplary view illustrating various function keys overlapped with the scroll wheel of the scroll wheel device 200 in accordance with an embodiment of the present invention. In FIG. 6, it is preferable that the scroll wheel device 200 is the touch wheel device.

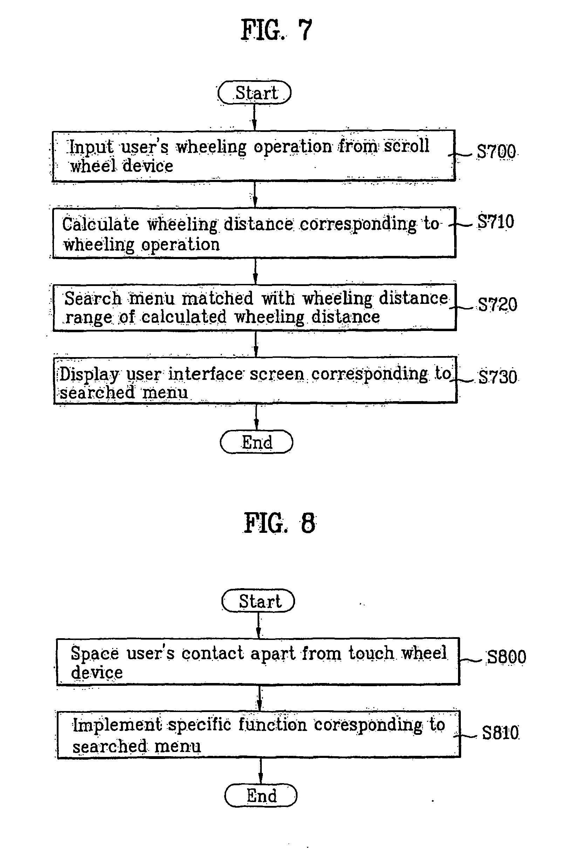

An exemplary method for implementing functions using a mobile terminal having the scroll wheel device according to an embodiment of the present invention will be described in detail with reference to FIG. 7 to FIG. 9.

FIG. 7 is a flow chart illustrating an exemplary method for implementing functions using the mobile terminal having the scroll wheel device according to an embodiment of the present invention. Referring to FIG. 7, the user's wheeling operation is sensed and inputted in step S700. Then, in step S710, the wheeling distance corresponding to the input wheeling operation is calculated. The menu that corresponds with the wheeling distance range, that in turn corresponds with the calculated wheeling distance is searched in step S720. Next, the user interface screen according to the searched menu is displayed in step S730.

In step S730, an initial screen of the user interface screen is preferably displayed if the wheeling distance corresponds to the initial wheeling distance greater than the triggering wheeling distance.

FIG. 8 is a flow chart illustrating an exemplary method for implementing functions using the function keys according to an embodiment of the present invention. If the scroll wheel device is the touch wheel device, the specific function is implemented as follows.

If the user breaks contact from the touch wheel device in step S800, the specific function corresponding to the searched menu at the time the user break contact is implemented in step S810.

Meanwhile, if the scroll wheel device 200 is the jog dial device, the specific function is implemented as follows. If the user stops jogging the dial of the jog dial device in step S800, the specific function corresponding to the searched menu at the time the user stops jogging is implemented in step S810.

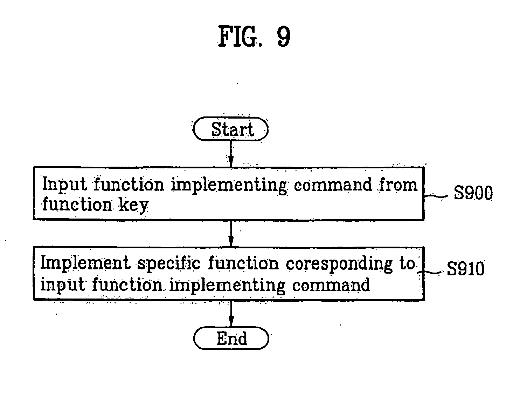

FIG. 9 is a flow chart illustrating an exemplary method for implementing functions using the touch wheel device according to an embodiment of the present invention. The function implementing command is received in step S900.

Then, the specific function corresponding to the input function implementing command is implemented in step S910.

Examples of the specific functions have been described above.

As described above, the mobile terminal having a scroll wheel device and the method for implementing functions using the same according to embodiments of the present invention have the following advantages.

First, it is possible to quickly search menus using the scroll wheel device of the mobile terminal.

Second, since the scroll wheel device and the user interface linked to the operation of the user are provided, there is user convenience.

Third, it is possible to provide a convenient scroll function using the scroll wheel device in various applications that require scrolling.

Finally, it is possible to implement the specific function using the scroll wheel device without clicking the function key of the mobile terminal.

It will be appreciated that, in various of the above-disclosed and other features and functions, or alternatives thereof, may be implemented on a programmed microprocessor, a microcontroller, an integrated circuit element such as ASIC, PLD, PLA, FPGA, or PAL, or the like, a hardwired electronic or logic circuit, or a programmable logic device.

It will be appreciated that the described flow process can be implemented as a self-consistent sequence of computerized steps that lead to a desired result. These steps can be defined by and/or in one or more computer instructions stored in a computer-readable medium, which should be understood to encompass using a carrier wave, or the like to provided the software instructions to a processing device. These steps can be performed by a processor executing the instructions that define the steps. Further, the flow process can be performed by a processor executing one or more appropriate programs, by special purpose hardware designed to perform the method, or any combination of such hardware, firmware and software elements.

It will be appreciated that various of the above-disclosed and other features and functions, or alternatives thereof, may be desirably combined into many other different devices or applications. Also, various presently unforeseen or unanticipated alternatives, modifications, variations or improvements therein may be subsequently made by those skilled in the art, and are also intended to be encompassed by the following claims.

## Claims

1. A mobile terminal having a scroll wheel device (200) comprising:
a display (260);
the scroll wheel device (200) adapted to sense a user's wheeling operation;
a memory (230) adapted to store data having different menus and associated user interface screens; and
a controller (220) adapted to calculate a wheeling distance corresponding to the wheeling operation sensed by the scroll wheel device (200),
**characterised in that** the controller (220) is further adapted to search data of a selected menu stored in the memory (230), and to output a first control signal to the display (260) to display an initial user interface screen if the wheeling distance corresponds to an initial wheeling distance range which is greater than a triggering wheeling distance, and/or to display a user interface screen associated to a selected menu if the calculated wheeling distance reaches a set value that matches a predefined wheeling distance range corresponding to the selected menu, wherein a sequence of user interface screens is displayed during the wheeling operation depending on which menu corresponds to a particular wheeling distance, and wherein the controller (220) is further adapted to output a second control signal to implement a specific function corresponding to the selected menu if a user contact with the scroll wheel device (200) is no longer sensed.

2. The mobile terminal having a scroll wheel device (200) as claimed in claim 1,
wherein the controller (220) is adapted to calculate the wheeling distance based on a first contact point, a final contact point, and a direction of the wheeling operation sensed by the scroll wheel device (200).

3. The mobile terminal having a scroll wheel device (200) as claimed in claim 1 or 2,
wherein the controller (220) is adapted to output the first control signal if the controller (220) determines that the calculated wheeling distance is greater than a triggering wheeling distance.

4. The mobile terminal having a scroll wheel device (200) as claimed in one of claims 1 to 3,
wherein the scroll wheel device is a touch wheel device or a jog dial device.

5. The mobile terminal having a scroll wheel device (200) as claimed in claim 4,
wherein the touch wheel device includes a heat sensor to sense a finger motion of the user at the touch wheel device.

6. The mobile terminal having a scroll wheel device (220) as claimed in claim 4, wherein the jog dial device has a dial operable by a user.

7. A method for implementing functions using a mobile terminal having a scroll wheel device (200), wherein the scroll wheel device (200) is a touch wheel device or a jog dial device, the method comprising the steps of:
a) calculating a wheeling distance corresponding to a sensed wheeling operation, **characterized by** the steps of:
b) displaying an initial user interface screen if the wheeling distance corresponds to an initial wheeling distance range which is greater than a triggering wheeling distance,
c) searching for data that corresponds to a menu stored in a memory if the calculated wheeling distance matches a predefined wheeling distance range of a selected menu;
d) displaying a user interface screen corresponding to the selected menu, wherein a sequence of user interface screens is displayed during the wheeling operation depending on which menu corresponds to a particular wheeling distance,
e) implementing a specific function corresponding to the selected menu if a user contact with the scroll wheel device is no longer sensed.

8. The method as claimed in claim 7,
further comprising the steps of receiving a function implementing command, and implementing a specific function corresponding to the function implementing command.

## Patentansprüche

1. Mobiles Endgerät mit einer Scroll-Einrichtung (200), umfassend:
ein Display (260),
wobei die Scroll-Einrichtung (200) eine Drehbewegung eines Benutzers zu erfassen vermag,
einen Speicher (230), der Daten mit verschiedenen Menüs und zugehörigen Benutzerschnittstellenbildschirmanzeigen zu speichern vermag, und
eine Steuerung (220), die einen Drehbetrag entsprechend der von der Scroll-Einrichtung (200) erfassten Drehbewegung zu berechnen vermag,
**dadurch gekennzeichnet, dass** die Steuerung (220) ferner dazu ausgebildet ist, Daten eines ausgewählten Menüs, das in dem Speicher (230) gespeichert ist, zu suchen und ein erstes Steuersignal an das Display (260) auszugeben, um eine anfängliche Benutzerschnittstellenbildschirmanzeige wiederzugeben, wenn der Drehbetrag einem anfänglichen Drehbetragsbereich entspricht, der größer als ein auslösender Drehbetrag ist, und/oder um eine einem ausgewählten Menü entsprechende Benutzerschnittstellenbildschirmanzeige wiederzugeben, wenn der berechnete Drehbetrag einen vordefinierten Wert erreicht, der mit einem vorbestimmten, dem ausgewählten Menü entsprechenden Drehbetragsbereich übereinstimmt, wobei während der Drehbewegung eine Abfolge der Benutzerschnittstellenbildschirmanzeigen wiedergegeben wird abhängig davon, welches Menü einem bestimmten Drehbetrag entspricht, und wobei die Steuerung (220) ferner dazu ausgebildet ist, ein zweites Steuersignal auszugeben, um eine spezifische, dem ausgewählten Menü entsprechende Funktion zu implementieren, wenn ein Benutzerkontakt mit der Scroll-Einrichtung (200) nicht länger festgestellt wird.

2. Mobiles Endgerät mit einer Scroll-Einrichtung (200) nach Anspruch 1, bei dem die Steuerung (220) den Drehbetrag basierend auf einem ersten Kontaktpunkt, einem finalen Kontaktpunkt und einer durch die Scroll-Einrichtung (200) erfassten Richtung der Drehbewegung zu berechnen vermag.

3. Mobiles Endgerät mit einer Scroll-Einrichtung (200) nach Anspruch 1 oder 2, bei dem die Steuerung (220) dazu ausgebildet ist, das erste Steuersignal auszugeben, wenn die Steuerung (220) feststellt, dass der berechnete Drehbetrag größer als ein auslösender Drehbetrag ist.

4. Mobiles Endgerät mit einer Scroll-Einrichtung (200) nach einem der Ansprüche 1 bis 3, bei dem die Scroll-Einrichtung eine berührungsempfindliche Dreheinrichtung oder eine Drehradeinrichtung ist.

5. Mobiles Endgerät mit einer Scroll-Einrichtung (200) nach Anspruch 4, bei dem die Scroll-Einrichtung einen Wärmesensor aufweist, um eine Fingerbewegung des Benutzers an der berührungsempfindlichen Dreheinrichtung zu erfassen.

6. Mobiles Endgerät mit einer Scroll-Einrichtung (200) nach Anspruch 4, bei dem die Drehradeinrichtung einen von einem Benutzer bedienbaren Drehknopf aufweist.

7. Verfahren zum Implementieren von Funktionen, die ein mobiles Endgerät mit einer Scroll-Einrichtung (200) verwenden, wobei die Scroll-Einrichtung (200) eine berührungsempfindliche Dreheinrichtung oder eine Drehradeinrichtung ist, wobei das Verfahren die Schritte umfasst:
a) Berechnen eines Drehbetrags entsprechend einer erfassten Drehbewegung, **gekennzeichnet durch** die Schritte:
b) Wiedergeben einer anfänglichen Benutzerschnittstellenbildschirmanzeige, wenn der Drehbetrag einem anfänglichen Drehbetragsbereich entspricht, der größer als ein auslösender Drehbetrag ist,
c) Suchen nach Daten, welche einem in einem Speicher gespeicherten Menü entsprechen, wenn der berechnete Drehbetrag mit einem vorbestimmten Drehbetragsbereich eines ausgewählten Menüs übereinstimmt,
d) Wiedergeben einer Benutzerschnittstellenbildschirmanzeige entsprechend dem ausgewählten Menü, wobei während der Drehbewegung eine Abfolge der Benutzerschnittstellenbildschirmanzeigen wiedergegeben wird abhängig davon, welches Menü einem bestimmten Drehbetrag entspricht,
e) Implementieren einer dem ausgewählten Menü entsprechenden spezifischen Funktion, wenn ein Benutzerkontakt mit der Scroll-Einrichtung nicht länger festgestellt wird.

8. Verfahren nach Anspruch 7, ferner umfassend die Schritte des Erhaltens eines Funktionsimplementierungsbefehls und des Implementierens einer dem Funktionsimplementierungsbefehl entsprechenden spezifischen Funktion.

## Revendications

1. Terminal mobile ayant un dispositif à molette de défilement (200) comprenant :
un afficheur (260) ;
le dispositif à molette de défilement (200) adapté à détecter une opération de déplacement de la molette d'un utilisateur ;
une mémoire (230) adaptée à stocker des données ayant différents menus et écrans d'interface d'utilisateur associés ; et
un contrôleur (220) adapté à calculer une distance de déplacement de la molette correspondant à l'opération de déplacement de la molette détectée par le dispositif à molette de défilement (200),
**caractérisé en ce que** le contrôleur (220) est en outre adapté à rechercher des données d'un menu sélectionné stocké dans la mémoire (230) et à délivrer en sortie un premier signal de commande à l'afficheur (260) pour afficher un écran d'interface d'utilisateur initial si la distance de déplacement de la molette correspond à une plage de distance de déplacement de la molette initiale qui est plus grande qu'une distance de déplacement de la molette de déclenchement, et/ou pour afficher un écran d'interface d'utilisateur associé à un menu sélectionné si la distance de déplacement de la molette calculée atteint une valeur fixée qui correspond à une plage de distance de déplacement de la molette prédéfinie correspondant au menu sélectionné, dans lequel une séquence d'écrans d'interface d'utilisateur est affichée pendant l'opération de déplacement de la molette en fonction de quel menu correspond à une distance de déplacement de la molette particulière, et dans lequel le contrôleur (220) est en outre adapté à délivrer en sortie un deuxième signal de commande pour mettre en oeuvre une fonction spécifique correspondant au menu sélectionné si un contact de l'utilisateur avec le dispositif à molette de défilement (200) n'est plus détecté.

2. Terminal mobile ayant un dispositif à molette de défilement (200) selon la revendication 1,
dans lequel le contrôleur (220) est adapté à calculer la distance de déplacement de la molette sur la base d'un premier point de contact, d'un point de contact final, et d'un sens de l'opération de déplacement de la molette détectée par le dispositif à molette de défilement (200).

3. Terminal mobile ayant un dispositif à molette de défilement (200) selon la revendication 1 ou 2,
dans lequel le contrôleur (220) est adapté à délivrer en sortie le premier signal de commande si le contrôleur (220) détermine que la distance de déplacement de la molette calculée est plus grande qu'une distance de déplacement de la molette de déclenchement.

4. Terminal mobile ayant un dispositif à molette de défilement (200) selon l'une des revendications 1 à 3,
dans lequel le dispositif à molette de défilement est un dispositif à molette tactile ou un dispositif à commande rotative.

5. Terminal mobile ayant un dispositif à molette de défilement (200) selon la revendication 4,
dans lequel le dispositif à molette tactile inclut un détecteur de chaleur qui détecte un mouvement d'un doigt de l'utilisateur au niveau du dispositif à molette tactile.

6. Terminal mobile ayant un dispositif à molette de défilement (200) selon la revendication 4,
dans lequel le dispositif à commande rotative a un rotateur utilisable par un opérateur.

7. Procédé de mise en oeuvre de fonctions utilisant un terminal mobile ayant un dispositif à molette de défilement (200),
dans lequel le dispositif à molette de défilement (200) est un dispositif à molette tactile ou un dispositif à commande rotative, le procédé comprenant les étapes de :
a) calcul d'une distance de déplacement de la molette correspondant à une opération de déplacement de la molette détectée, **caractérisé par** les étapes de :
b) affichage d'un écran d'interface d'utilisateur initial si la distance de déplacement de la molette correspond à une plage de distance de déplacement de la molette initiale qui est plus grande qu'une distance de déplacement de la molette de déclenchement,
c) recherche de données qui correspondent à un menu stocké dans une mémoire si la distance de déplacement de la molette calculée correspond à une plage de distance de déplacement de la molette prédéfinie d'un menu sélectionné ;
d) affichage d'un écran d'interface d'utilisateur correspondant au menu sélectionné, dans lequel une séquence d'écrans d'interface d'utilisateur est affichée pendant l'opération de déplacement de la molette en fonction de quel menu correspond à une distance de déplacement de la molette particulière ;
e) mise en oeuvre d'une fonction spécifique correspondant au menu sélectionné si un contact de l'utilisateur avec le dispositif à molette de défilement n'est plus détecté.

8. Procédé selon la revendication 7,
comprenant en outre les étapes de réception d'une commande de mise en oeuvre de fonction, et de mise en oeuvre d'une fonction spécifique correspondant à la commande de mise en oeuvre de fonction.
